# EUROPEAN PATENT SPECIFICATION

(11) **EP 2 588 732 B1**
(45) Date of publication and mention of the grant of the patent: **02.01.2019**
(21) Application number: 11801316.8
(22) Date of filing: 09.06.2011
(51) Int. Cl.: F02C 1/00, F02C 6/18, F02C 7/08

(54) **LOW EMISSION TRIPLE-CYCLE POWER GENERATION SYSTEMS AND METHODS**
EMISSIONSARME DREIFACHZYKLUS-STROMERZEUGUNGSSYSTEME UND VERFAHREN DAFÜR
PROCÉDÉS ET SYSTÈMES DE GÉNÉRATION D'ÉLECTRICITÉ À TROIS CYCLES ET À FAIBLE ÉMISSION

(30) Priority: 02.07.2010 US 361170 P
(43) Date of publication of application: 08.05.2013
(73) Proprietor: ExxonMobil Upstream Research Company, Spring TX 77389 (US)
(72) Inventor: OELFKE, Russell, H., Houston TX 77085-2359 (US); MINTA, Moses, Missouri City TX 77459 (US)
(74) Representative: ExxonMobil Chemical Europe Inc.
(86) International application number: PCT/US2011/039824
(87) International publication number: WO 2012/003076

(56) References cited:
- US-A1- 2005 144 961
- US-A1- 2008 104 939
- US-A1- 2008 104 958
- US-A1- 2008 141 643
- US-A1- 2008 275 278

## Description

### CROSS-REFERENCE TO RELATED APPLICATIONS

This application contains subject matter related to U.S. Patent Application Number 61/361,169, filed July 2, 2010 entitled "Systems and Methods for Controlling Combustion of a Fuel"; U.S. Patent Application Number 61/361,173, filed July 2, 2010, entitled "Low Emission Triple-Cycle Power Generation Systems and Methods"; U.S. Patent Application Number 61/361,176, filed July 2, 2010, entitled "Stoichiometric Combustion With Exhaust Gas Recirculation and Direct Contact Cooler"; U.S. Patent Application Number 61/361,178, filed July 2, 2010, entitled "Stoichiometric Combustion of Enriched Air With Exhaust Gas Recirculation" and U.S. Patent Application Number 61/361,180 filed July 2, 2010, entitled "Low Emission Power Generation Systems and Methods".

### FIELD OF THE DISCLOSURE

Embodiments of the disclosure relate to low emission power generation in combined-cycle power systems. More particularly, embodiments of the disclosure relate to methods and apparatuses for combusting a fuel for enhanced CO₂ manufacture and capture.

### BACKGROUND OF THE DISCLOSURE

This section is intended to introduce various aspects of the art, which may be associated with exemplary embodiments of the present disclosure. This discussion is believed to assist in providing a framework to facilitate a better understanding of particular aspects of the present disclosure. Accordingly, it should be understood that this section should be read in this light, and not necessarily as admissions of prior art.

Many oil producing countries are experiencing strong domestic growth in power demand and have an interest in enhanced oil recovery (EOR) to improve oil recovery from their reservoirs. Two common EOR techniques include nitrogen (N₂) injection for reservoir pressure maintenance and carbon dioxide (CO₂) injection for miscible flooding for EOR. There is also a global concern regarding green house gas (GHG) emissions. This concern combined with the implementation of cap-and-trade policies in many countries make reducing CO₂ emissions a priority for these and other countries as well as the companies that operate hydrocarbon production systems therein.

Some approaches to lower CO₂ emissions include fuel de-carbonization or post-combustion capture using solvents, such as amines. However, both of these solutions are expensive and reduce power generation efficiency, resulting in lower power production, increased fuel demand and increased cost of electricity to meet domestic power demand. In particular, the presence of oxygen, SOx, and NOx components makes the use of amine solvent absorption very problematic. Another approach is an oxyfuel gas turbine in a combined cycle (e.g. where exhaust heat from the gas turbine Brayton cycle is captured to make steam and produce additional power in a Rankin cycle). However, there are no commercially available gas turbines that can operate in such a cycle and the power required to produce high purity oxygen significantly reduces the overall efficiency of the process. Several studies have compared these processes and show some of the advantages of each approach. *See, e.g.* BOLLAND, OLAV, and UNDRUM, HENRIETTE, Removal of CO2 from Gas Turbine Power Plants: Evaluation of pre- and post-combustion methods, SINTEF Group, found at http://www.energy.sintef.no/publ/xergi/98/3/3art-8-engelsk.htm (1998).

Other approaches to lower CO₂ emissions include stoichiometric exhaust gas recirculation, such as in natural gas combined cycles (NGCC). In a conventional NGCC system, only about 40% of the air intake volume is required to provide adequate stoichiometric combustion of the fuel, while the remaining 60% of the air volume serves to moderate the temperature and cool the exhaust gas so as to be suitable for introduction into the succeeding expander, but also disadvantageously generate an excess oxygen byproduct which is difficult to remove. The typical NGCC produces low pressure exhaust gas which requires a fraction of the power produced to extract the CO₂ for sequestration or EOR, thereby reducing the thermal efficiency of the NGCC. Further, the equipment for the CO₂ extraction is large and expensive, and several stages of compression are required to take the ambient pressure gas to the pressure required for EOR or sequestration. Such limitations are typical of post-combustion carbon capture from low pressure exhaust gas associated with the combustion of other fossil fuels, such as coal. U.S. Patent Application Publication No. 2008/0104958 A1 is directed to power plants and processes for lowering CO₂ emissions generally including extracting a portion of the recirculated CO₂ rich flue gas mid-way through the compression pathway of a gas turbine and removing the CO₂ in a separation unit. U.S. Patent Application Publication No. 2008/0104939 A1 is directed to a power generation system including at least one turbine system, the turbine system including a high pressure expander fluidly coupled to a low pressure expander with a CO₂ separation system fluidly coupled there between.

The foregoing discussion of need in the art is intended to be representative rather than exhaustive. A technology addressing one or more such needs, or some other related shortcoming in the field, would benefit power generation in combined-cycle power systems.

### SUMMARY OF THE DISCLOSURE

The present disclosure provides systems and methods for combusting fuel, producing power, processing produced hydrocarbons, and/or generating inert gases. The systems may be implemented in a variety of circumstances and the products of the system may find a variety of uses. For example, the systems and methods may be adapted to produce a carbon dioxide stream and a nitrogen stream, each of which may have a variety of possible uses in hydrocarbon production operations. Similarly, the inlet fuel may come from a variety of sources. For example, the fuel may be any conventional fuel stream or may be a produced hydrocarbon stream, such as one containing methane and heavier hydrocarbons.

The invention is defined by the subject-matter of the integrated system of claim 1 and the method of generating power according to claim 11. Advantageous embodiments form part of the dependent claims.

### BRIEF DESCRIPTION OF THE DRAWINGS

The foregoing and other advantages of the present disclosure may become apparent upon reviewing the following detailed description and drawings of non-limiting examples of embodiments in which:
FIG. 1 depicts an integrated system for low emission power generation and enhanced CO₂ recovery, according to one or more embodiments of the present disclosure.
FIG. 2 depicts another integrated system for low emission power generation and enhanced CO₂ recovery, according to one or more embodiments of the present disclosure.
FIG. 3 depicts another integrated system for low emission power generation and enhanced CO₂ recovery, according to one or more embodiments of the present disclosure.

### DETAILED DESCRIPTION OF THE DISCLOSURE

In the following detailed description section, the specific embodiments of the present disclosure are described in connection with preferred embodiments. However, to the extent that the following description is specific to a particular embodiment or a particular use of the present disclosure, this is intended to be for exemplary purposes only and simply provides a description of the exemplary embodiments. Accordingly, the disclosure is not limited to the specific embodiments described below, but it is defined by the scope of the appended claims.

Various terms as used herein are defined below. To the extent a term used in a claim is not defined below, it should be given the broadest definition persons in the pertinent art have given that term as reflected in at least one printed publication or issued patent.

As used herein, the term "natural gas" refers to a multi-component gas obtained from a crude oil well (associated gas) or from a subterranean gas-bearing formation (non-associated gas). The composition and pressure of natural gas can vary significantly. A typical natural gas stream contains methane (CH₄) as a major component, *i.e.* greater than 50 mol% of the natural gas stream is methane. The natural gas stream can also contain ethane (C₂H₆), higher molecular weight hydrocarbons (e.g., C₃-C₂₀ hydrocarbons), one or more acid gases (e.g., hydrogen sulfide, carbon dioxide), or any combination thereof. The natural gas can also contain minor amounts of contaminants such as water, nitrogen, iron sulfide, wax, crude oil, or any combination thereof.

As used herein, the term "stoichiometric combustion" refers to a combustion reaction having a volume of reactants comprising a fuel and an oxidizer and a volume of products formed by combusting the reactants where the entire volume of the reactants is used to form the products. As used herein, the term "substantially stoichiometric combustion" refers to a combustion reaction having a molar ratio of combustion fuel to oxygen ranging from about plus or minus 10% of the oxygen required for a stoichiometric ratio or more preferably from about plus or minus 5% of the oxygen required for the stoichiometric ratio. For example, the stoichiometric ratio of fuel to oxygen for methane is 1:2 (*CH*₄ + 2*O*₂ > *CO*₂ + 2*H₂O*)*.* Propane will have a stoichiometric ratio of fuel to oxygen of 1:5. Another way of measuring substantially stoichiometric combustion is as a ratio of oxygen supplied to oxygen required for stoichiometric combustion, such as from about 0.9:1 to about 1.1:1, or more preferably from about 0.95:1 to about 1.05:1.

As used herein, the term "stream" refers to a volume of fluids, although use of the term stream typically means a moving volume of fluids (*e.g.*, having a velocity or mass flow rate). The term "stream," however, does not require a velocity, mass flow rate, or a particular type of conduit for enclosing the stream.

Embodiments of the presently disclosed systems and processes may be used to produce ultra low emission electric power and CO₂ for enhanced oil recovery (EOR) or sequestration applications. According to embodiments disclosed herein, a mixture of air and fuel can be stoichiometrically or substantially stoichiometrically combusted and mixed with a stream of recycled exhaust gas. In some implementations, the combustor may be operated in an effort to obtain stoichiometric combustion, with some deviation to either side of stoichiometric combustion. Additionally or alternatively, the combustor and the gas turbine system may be adapted with a preference to substoichiometric combustion to err or deviate on the side of depriving the system of oxygen rather than supplying excess oxygen. The stream of recycled exhaust gas, generally including products of combustion such as CO₂, can be used as a diluent to control or otherwise moderate the temperature of the combustion chamber and/or the temperature of the exhaust gas entering the succeeding expander.

Combustion at near stoichiometric conditions (or "slightly rich" combustion) can prove advantageous in order to eliminate the cost of excess oxygen removal. By cooling the exhaust gas and condensing the water out of the stream, a relatively high content CO₂ stream can be produced. While a portion of the recycled exhaust gas can be utilized for temperature moderation in the closed Brayton cycle, a remaining purge stream can be used for EOR applications and electric power can be produced with little or no SOx, NOx, or CO₂ being emitted to the atmosphere.

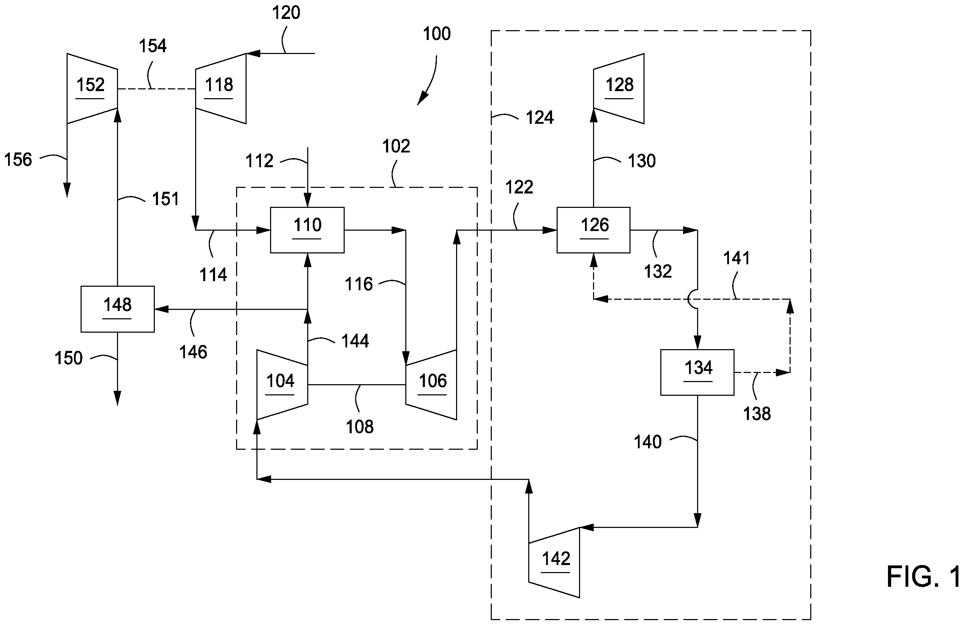

Referring now to the figures, FIG. 1 depicts a schematic of an illustrative integrated system **100** for power generation and CO₂ recovery using a combined-cycle arrangement, according to one or more embodiments. According to the invention, the power generation system **100** includes a gas turbine system **102** characterized as a power-producing, closed Brayton cycle. The gas turbine system **102** has a first or main compressor **104** coupled to an expander **106** via a shaft **108.** The shaft **108** can be any mechanical, electrical, or other power coupling, thereby allowing a portion of the mechanical energy generated by the expander **106** to drive the main compressor **104.** In at least one embodiment, the gas turbine system **102** can be a standard gas turbine, where the main compressor **104** and expander **106** form the compressor and expander ends, respectively. In other embodiments, however, the main compressor **104** and expander **106** can be individualized components in the system **102.**

The gas turbine system **102** includes a combustion chamber **110** configured to combust a fuel in line **112** mixed with a compressed oxidant in line **114.** In one or more embodiments, the fuel in line **112** can include any suitable hydrocarbon gas or liquid, such as natural gas, methane, ethane, naphtha, butane, propane, syngas, diesel, kerosene, aviation fuel, coal derived fuel, bio-fuel, oxygenated hydrocarbon feedstock, or combinations thereof. The compressed oxidant in line **114** is derived from a second or inlet compressor **118** fluidly coupled to the combustion chamber **110** and adapted to compress a feed oxidant **120.** In one or more embodiments, the feed oxidant **120** can include any suitable gas containing oxygen, such as air, oxygen-rich air, oxygen-depleted air, pure oxygen, or combinations thereof.

As will be described in more detail below, the combustion chamber **110** receives a compressed recycle stream **144,** including an exhaust gas primarily having CO₂ and nitrogen components. The compressed recycle stream **144** is derived from the main compressor **104** and adapted to help facilitate the stoichiometric or substantially stoichiometric combustion of the compressed oxidant in line **114** and fuel in line **112,** and also increase the CO₂ concentration in the exhaust gas. A discharge stream **116** directed to the inlet of the expander **106** is generated as a product of combustion of the fuel in line **112** and the compressed oxidant in line **114,** in the presence of the compressed recycle stream **144.** In at least one embodiment, the fuel in line **112** can be primarily natural gas, thereby generating a discharge **116** including volumetric portions of vaporized water, CO₂, nitrogen, nitrogen oxides (NOx), and sulfur oxides (SO_{X}). In some embodiments, a small portion of unburned fuel or other compounds may also be present in the discharge **116** due to combustion equilibrium limitations. As the discharge stream **116** expands through the expander **106** it generates mechanical power to drive the main compressor **104,** an electrical generator, or other facilities, and also produce a gaseous exhaust stream **122** having a heightened CO₂ content resulting from the influx of the compressed recycle exhaust gas in line **144.** The mechanical power generated by the expander **106** may additionally or alternatively be used for other purposes, such as to provide electricity to a local grid or to drive other systems in a facility or operation.

The power generation system **100** includes an exhaust gas recirculation (EGR) system **124.** According to the invention, the EGR system **124** includes a heat recovery steam generator (HRSG) **126,** or similar device, fluidly coupled to a steam gas turbine **128.** In at least one embodiment, the combination of the HRSG **126** and the steam gas turbine **128** can be characterized as a closed Rankine cycle. In combination with the gas turbine system **102,** the HRSG **126** and the steam gas turbine **128** form part of a combined-cycle power generating plant, such as a natural gas combined-cycle (NGCC) plant. The gaseous exhaust stream **122** is sent to the HRSG **126** in order to generate a stream of steam in line **130** and a cooled exhaust gas in line **132.** In one embodiment, the steam in line **130** can be sent to the steam gas turbine **128** to generate additional electrical power.

The cooled exhaust gas in line **132** is sent to at least one cooling unit **134** configured to reduce the temperature of the cooled exhaust gas in line **132** and generate a cooled recycle gas stream **140.** In one or more embodiments, the cooling unit **134** can be a direct contact cooler, trim cooler, a mechanical refrigeration unit, or combinations thereof. The cooling unit **134** is configured to remove a portion of condensed water via a water dropout stream **138** which is, according to the invention, routed to the HRSG **126** via line **141** to provide a water source for the generation of additional steam in line **130.** The cooled recycle gas stream **140** is directed to a boost compressor **142** fluidly coupled to the cooling unit **134.** Cooling the cooled exhaust gas in line **132** in the cooling unit **134** can reduce the power required to compress the cooled recycle gas stream **140** in the boost compressor **142.**

The boost compressor **142** is configured to increase the pressure of the cooled recycle gas stream **140** before it is introduced into the main compressor **104.** As opposed to a conventional fan or blower system, the boost compressor **142** increases the overall density of the cooled recycle gas stream **140,** thereby directing an increased mass flow rate for the same volumetric flow to the main compressor **104.** Because the main compressor **104** is typically volume-flow limited, directing more mass flow through the main compressor **104** can result in a higher discharge pressure from the main compressor **104,** thereby translating into a higher pressure ratio across the expander **106.** A higher pressure ratio generated across the expander **106** can allow for higher inlet temperatures and, therefore, an increase in expander **106** power and efficiency. This can prove advantageous since the CO₂-rich discharge **116** generally maintains a higher specific heat capacity.

The main compressor **104** is configured to compress the cooled recycle gas stream **140** received from the boost compressor **142** to a pressure nominally above the combustion chamber **110** pressure, thereby generating the compressed recycle stream **144.** In at least one embodiment, a purge stream **146** can be tapped from the compressed recycle stream **144** and subsequently treated in a CO₂ separator **148** to capture CO₂ at an elevated pressure via line **150.** The separated CO₂ in line **150** can be used for sales, used in another process requiring carbon dioxide, and/or compressed and injected into a terrestrial reservoir for enhanced oil recovery (EOR), sequestration, or another purpose.

A residual stream **151,** essentially depleted of CO₂ and consisting primarily of nitrogen, can be derived from the CO₂ separator **148.** In some implementations, the nitrogen-rich residual stream **151** may be vented and/or used directly in one or more operations. In one or more embodiments, the residual stream **151,** which may be at pressure, can be expanded in a gas expander **152,** such as a power-producing nitrogen expander, fluidly coupled to the CO₂ separator **148.** As depicted in FIGs. 1-3, the gas expander **152** can be optionally coupled to the inlet compressor **118** through a common shaft **154** or other mechanical, electrical, or other power coupling, thereby allowing a portion of the power generated by the gas expander **152** to drive the inlet compressor **118.** After expansion in the gas expander **152,** an exhaust gas in line **156,** consisting primarily of nitrogen, can be vented to the atmosphere or implemented into other applications known in the art. For example, the expanded nitrogen stream can be used in an evaporative cooling process configured to further reduce the temperature of the exhaust gas as generally described in the concurrently filed U.S. Patent Application entitled "Stoichiometric Combustion with Exhaust Gas Recirculation and Direct Contact Cooler". In at least one embodiment, the combination of the gas expander **152,** inlet compressor **118,** and CO₂ separator can be characterized as an open Brayton cycle, or the third power producing component of the system **100.**

In other embodiments, however, the gas expander **152** can be used to provide power to other applications, and not directly coupled to the stoichiometric compressor **118.** For example, there may be a substantial mismatch between the power generated by the expander **152** and the requirements of the compressor **118.** In such cases, the expander **152** could be adapted to drive a smaller compressor (not shown) that demands less power. In yet other embodiments, the gas expander **152** can be replaced with a downstream compressor (not shown) configured to compress the residual stream **151** and generate a compressed exhaust gas suitable for injection into a reservoir for pressure maintenance or EOR applications.

The EGR system **124** as described herein, especially with the addition of the boost compressor **142,** can be implemented to achieve a higher concentration of CO₂ in the exhaust gas of the power generation system **100,** thereby allowing for more effective CO₂ separation for subsequent sequestration, pressure maintenance, or EOR applications. For instance, embodiments disclosed herein can effectively increase the concentration of CO₂ in the exhaust gas stream to about 10vol% or higher. To accomplish this, the combustion chamber **110** can be adapted to stoichiometrically combust the incoming mixture of fuel in line **112** and compressed oxidant in line **114.** In order to moderate the temperature of the stoichiometric combustion to meet expander **106** inlet temperature and component cooling requirements, a portion of the exhaust gas derived from the compressed recycle stream **144** can be simultaneously injected into the combustion chamber **110** as a diluent. Thus, embodiments of the disclosure can essentially eliminate any excess oxygen from the exhaust gas while simultaneously increasing its CO₂ composition. As such, the gaseous exhaust stream **122** can have less than about 3.0 vol% oxygen, or less than about 1.0 vol% oxygen, or less than about 0.1 vol% oxygen, or even less than about 0.001 vol% oxygen.

The specifics of exemplary operation of the system **100** will now be discussed. As can be appreciated, specific temperatures and pressures achieved or experienced in the various components of any of the embodiments disclosed herein can change depending on, among other factors, the purity of the oxidant used and the specific makes and/or models of expanders, compressors, coolers, etc. Accordingly, it will be appreciated that the particular data described herein is for illustrative purposes only and should not be construed as the only interpretation thereof. In an embodiment, the inlet compressor **118** can be configured to provide compressed oxidant in line **114** at pressures ranging between about 19.30 bara and about 20.68 bara. Also contemplated herein, however, is aeroderivative gas turbine technology, which can produce and consume pressures of up to about 51.71 bara and more.

The main compressor **104** can be configured to compress recycled exhaust gas into the compressed recycle stream **144** at a pressure nominally above or at the combustion chamber **110** pressure, and use a portion of that recycled exhaust gas as a diluent in the combustion chamber **110.** Because amounts of diluent needed in the combustion chamber 110 can depend on the purity of the oxidant used for stoichiometric combustion or the model of expander **106,** a ring of thermocouples and/or oxygen sensors (not shown) can be associated with the combustion chamber or the gas turbine system generally to determine, by direct measurement or by estimation and/or calculation, the temperature and/or oxygen concentration in one or more streams. For example, thermocouples and/or oxygen sensors may be disposed on the outlet of the combustion chamber **110,** the inlet of the expander **106,** and/or the outlet of the expander **106.** In operation, the thermocouples and sensors can be adapted to regulate and determine the volume of exhaust gas required as diluent to cool the products of combustion to the required expander inlet temperature, and also regulate the amount of oxidant being injected into the combustion chamber **110.** Thus, in response to the heat requirements detected by the thermocouples and the oxygen levels detected by the oxygen sensors, the volumetric mass flow of compressed recycle stream **144** and compressed oxidant in line **114** can be manipulated or controlled to match the demand.

In at least one embodiment, a pressure drop of about 12-13 psia can be experienced across the combustion chamber **110** during stoichiometric combustion. Combustion of the fuel in line 112 and the compressed oxidant in line **114** can generate temperatures between about 1093 °C and about 1649 °C and pressures ranging from 17.24 bara to about 20.68 bara. Because of the increased mass flow and higher specific heat capacity of the CO₂-rich exhaust gas derived from the compressed recycle stream **144,** a higher pressure ratio can be achieved across the expander **106,** thereby allowing for higher inlet temperatures and increased expander **106** power.

The gaseous exhaust stream **122** exiting the expander **106** can have a pressure at or near ambient. In at least one embodiment, the gaseous exhaust stream **122** can have a pressure of about 1.048 bara. The temperature of the gaseous exhaust stream **122** can range from about 638 °C to about 677 °C before passing through the HRSG **126** to generate steam in line **130** and a cooled exhaust gas in line **132.** The cooled exhaust gas in line **132** can have a temperature ranging from about 88 °C to about 93 °C. In one or more embodiments, the cooling unit **134** can reduce the temperature of the cooled exhaust gas in line **132** thereby generating the cooled recycle gas stream **140** having a temperature between about 0 °C and 49°C, depending primarily on wet bulb temperatures in specific locations and during specific seasons. Depending on the degree of cooling provided by the cooling unit **134,** the cooling unit may be adapted to increase the mass flow rate of the cooled recycled gas stream.

According to one or more embodiments, the boost compressor **142** can be configured to elevate the pressure of the cooled recycle gas stream **140** to a pressure ranging from about 1.179 bara to about 1.448 bara. As a result, the main compressor **104** receives and compresses a recycled exhaust gas with a higher density and increased mass flow, thereby allowing for a substantially higher discharge pressure while maintaining the same or similar pressure ratio. In at least one embodiment, the temperature of the compressed recycle stream **144** discharged from the main compressor **104** can be about 427 °C, with a pressure of around 19.3 bara.

The following table provides testing results and performance estimations based on combined-cycle gas turbines, with and without the added benefit of a boost compressor **142,** as described herein.

**TABLE 1**

| **Triple -Cycle Performance Comparison** | | |
|---|---|---|
| **Power (MW)** | **Recirc. Cycle w/o Boost Compressor** | **Recirc. Cycle w/ Boost Compressor** |
| Gas Turbine Expander Power | 1055 | 1150 |
| Main Compressor | 538 | 542 |
| Fan or Boost Compressor | 13 | 27 |
| Inlet Compressor | 283 | 315 |
| Total Compression Power | 835 | 883 |
| Net Gas Turbine Power | 216 | 261 |
| Steam Turbine Net Power | 395 | 407 |
| Standard Machinery Net Power | 611 | 668 |
| Aux. Losses | 13 | 15 |
| Nitrogen Expander Power | 156 | 181 |
| **Combined Cycle Power** | **598** | **653** |

| ***Efficiency*** | | |
|---|---|---|
| Fuel Rate (mBTU/hr) | 5947 | 6322 |
| Heat Rate (BTU/kWh) | 9949 | 9680 |
| **Combined Cycle Eff. (%lhv)** | **34.3** | **35.2** |
| CO₂ Purge Pressure (psia) | 280 | 308 |

As should be apparent from Table 1, embodiments including a boost compressor **142** can result in an increase in expander **106** power (*i.e.,* "Gas Turbine Expander Power") due to the increase in pressure ratios. Although the power demand for the main compressor **104** can increase, its increase is more than offset by the increase in power output of the expander **106,** thereby resulting in an overall thermodynamic performance efficiency improvement of around 1% lhv (lower heated value).

Moreover, the addition of the boost compressor **142** can also increase the power output of the nitrogen expander **152,** when such an expander is incorporated. Still further, boost compressor **142** may increase the CO₂ pressure in the purge stream **146** line. An increase in purge pressure of the purge stream **146** can lead to improved solvent treating performance in the CO₂ separator **148** due to the higher CO₂ partial pressure. Such improvements can include, but are not limited to, a reduction in overall capital expenditures in the form of reduced equipment size for the solvent extraction process.

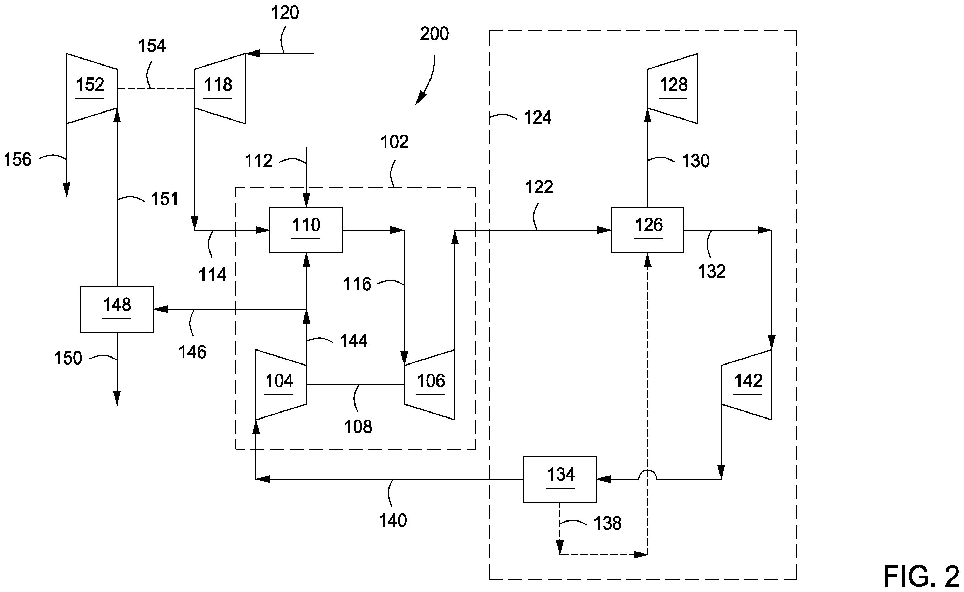

Referring now to FIG. 2, depicted is an alternative embodiment of the power generation system **100** of FIG. 1, embodied and described as system **200.** As such, FIG. 2 may be best understood with reference to FIG. 1. Similar to the system **100** of FIG. 1, the system **200** of FIG. 2 includes a gas turbine system **102** coupled to or otherwise supported by an exhaust gas recirculation (EGR) system **124.** The EGR system **124** in FIG. 2, however, can include an embodiment where the boost compressor **142** follows or may otherwise be fluidly coupled to the HRSG **126.** As such, the cooled exhaust gas in line **132** can be compressed in the boost compressor **142** before being reduced in temperature in the cooling unit **134.** Thus, the cooling unit **134** can serve as an aftercooler adapted to remove the heat of compression generated by the boost compressor **142.** As with previously disclosed embodiments, the water dropout stream **138** may or may not be routed to the HRSG **126** to generate additional steam in line **130.**

The cooled recycle gas stream **140** can then be directed to the main compressor 104 where it is further compressed, as discussed above, thereby generating the compressed recycle stream **144.** As can be appreciated, cooling the cooled exhaust gas in line **132** in the cooling unit **134** after compression in the boost compressor **142** can reduce the amount of power required to compress the cooled recycle gas stream **140** to a predetermined pressure in the succeeding main compressor **104.**

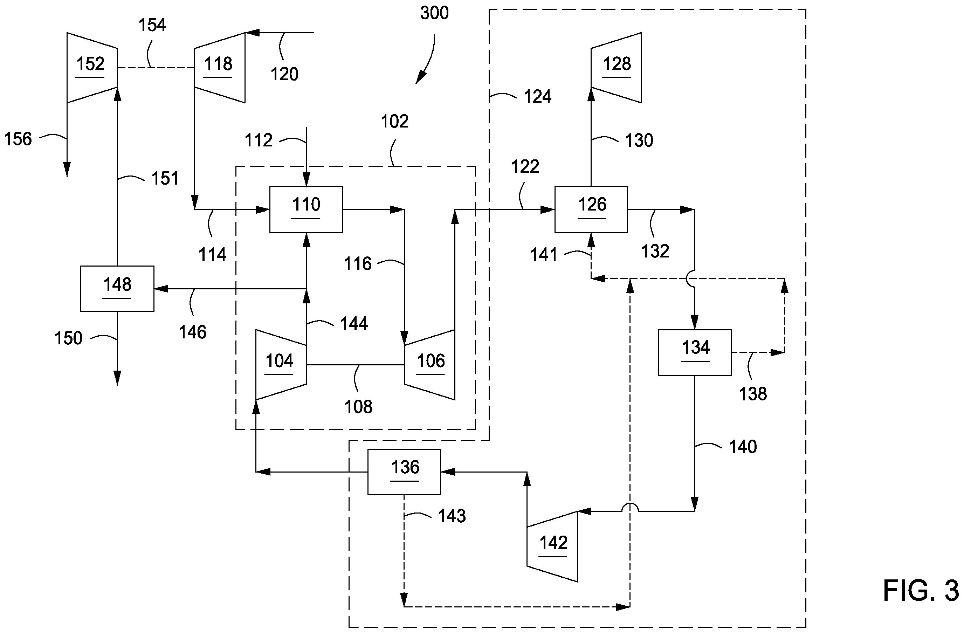

FIG. 3 depicts another embodiment of the low emission power generation system 100 of FIG. 1, embodied as system **300.** As such, FIG. 3 may be best understood with reference to FIGs. 1 and 2. Similar to the systems **100, 200** described in FIGs. 1 and 2, respectively, the system **300** includes a gas turbine system **102** supported by or otherwise coupled to an EGR system **124.** The EGR system **124** in FIG. 3, however, can include a first cooling unit **134** and a second cooling unit **136,** having the boost compressor **142** fluidly coupled therebetween. As with previous embodiments, each cooling unit **134, 136** can be a direct contact cooler, trim cooler, or the like, as known in the art.

In one or more embodiments, the cooled exhaust gas in line **132** discharged from the HRSG **126** can be sent to the first cooling unit **134** to produce a condensed water dropout stream **138** and a cooled recycle gas stream **140.** The cooled recycle gas stream **140** can be directed to the boost compressor **142** in order to boost the pressure of the cooled recycle gas stream **140,** and then direct it to the second cooling unit **136.** The second cooling unit **136** can serve as an aftercooler adapted to remove the heat of compression generated by the boost compressor **142,** and also remove additional condensed water via a water dropout stream **143.** In one or more embodiments, each water dropout stream **138, 143** may or may not be routed to the HRSG **126** to generate additional steam in line **130.**

The cooled recycle gas stream **140** can then be introduced into the main compressor **104** to generate the compressed recycle stream **144** nominally above or at the combustion chamber **110** pressure. As can be appreciated, cooling the cooled exhaust gas in line **132** in the first cooling unit **134** can reduce the amount of power required to compress the cooled recycle gas stream **140** in the boost compressor **142.** Moreover, further cooling exhaust in the second cooling unit **136** can reduce the amount of power required to compress the cooled recycle gas stream **140** to a predetermined pressure in the succeeding main compressor **104.**

## Claims

1. An integrated system (100, 200, 300), comprising:
a gas turbine system (102), comprising:
a first compressor (104) configured to receive and compress a cooled recycle gas stream (140) into a compressed recycle stream (144);
a second compressor (118) configured to receive and compress a feed oxidant (120) into a compressed oxidant;
a combustion chamber (110) configured to receive the compressed recycle stream and the compressed oxidant and stoichiometrically combust a fuel stream, wherein the compressed recycle stream serves as a diluent to moderate combustion temperatures; and
an expander (106) coupled to the first compressor and configured to receive a discharge from the combustion chamber to generate a gaseous exhaust stream (122) and at least partially drive the first compressor; and
an exhaust gas recirculation system, comprising:
a heat recovery steam generator (126) configured to receive the gaseous exhaust stream from the expander and generate steam and a cooled exhaust stream;
a cooling unit (134) configured to receive the cooled exhaust stream, reduce the temperature of the cooled exhaust stream, remove a portion of water condensed from the cooled exhaust stream via a water dropout stream (138) and generate the cooled recycle gas stream; and
a boost compressor (142) configured to receive the cooled exhaust stream before the cooling unit or the cooled recycle gas stream from the cooling unit and increase the pressure of the cooled exhaust stream or the cooled recycle gas stream before such stream is introduced into the first compressor, **characterized in that** a portion of the water condensed from the cooled water dropout stream (138) is removed from the cooled exhaust stream to provide a water source for the generation of additional steam in the heat recovery steam generator.

2. The system of claim 1, wherein the exhaust gas recirculation system further comprises a steam gas turbine (128) configured to receive the steam and generate electrical power.

3. The system of claim 1, wherein the feed oxidant is air, oxygen-rich air, and any combination thereof.

4. The system of claim 1, wherein the exhaust gas recirculation system further comprises a second cooling unit (136) having the boost compressor fluidly coupled between the cooling units, the second cooling unit configured to receive the cooled recycle gas stream and to generate an additional water dropout stream (143).

5. The system of claim 4, wherein the additional water dropout stream is fluidly coupled to the heat recovery steam generator to generate additional steam.

6. The system of claim 1, wherein the gaseous exhaust stream is provided to the heat recovery unit at a pressure above atmospheric.

7. The system of claim 1, wherein the boost compressor increases the pressure of the cooled recycle gas stream to a pressure between 1.179003 bara (17.1 psia) to 1.4479 bara (21 psia).

8. The system of claim 1, further comprising a purge stream (146) taken from the compressed recycle stream.

9. The system of claim 8, wherein the purge stream is treated in a CO₂ separator (148) to generate a carbon dioxide stream and a residual stream (151) substantially comprising nitrogen gas.

10. The system of claim 9, wherein at least a portion of the carbon dioxide stream is sent to a location for carbon dioxide sequestration, carbon dioxide sales, carbon capture, venting, or combinations thereof.

11. A method of generating power, comprising:
compressing a cooled recycle gas stream (140) in a first compressor (104) to generate a compressed recycle stream (144);
compressing a feed oxidant (120) in a second compressor (118) to generate a compressed oxidant;
combusting a fuel stream and the compressed oxidant in the presence of the compressed recycle stream in a combustion chamber (110), thereby generating a discharge, wherein the compressed recycle stream is adapted to moderate the temperature of the discharge;
expanding the discharge in an expander (106) to generate a gaseous exhaust stream (122) and at least one unit of power;
recovering heat from the gaseous exhaust discharge in a heat recovery steam generator (126) to produce steam and a cooled exhaust stream;
cooling the cooled exhaust stream in a cooling unit (134) to remove at least a portion of condensed water therefrom and generate the cooled recycle gas stream;
routing a portion of condensed water from the cooling unit via a water dropout stream (138) to the heat recovery steam generator to generate additional steam; and
increasing the pressure of the cooled exhaust stream or the cooled recycle gas stream in a boost compressor (142) before such stream is introduced into the first compressor.

12. The method of claim 11, further comprising generating electrical power from the steam in a steam gas turbine (128).

13. The method of claim 11, further comprising:
removing a portion of the compressed recycle stream in a purge stream (146);
treating the purge stream in a CO₂ separator (148); and
discharging a carbon dioxide stream and a residual stream (151) substantially comprising nitrogen gas from the CO₂ separator.

14. The method of claim 11, further comprising cooling the cooled recycle gas stream in a second cooling unit (136) after the pressure of the cooled recycle gas stream is increased in the boost compressor; and removing at least a portion of condensed water therefrom.

15. The method of claim 14, further comprising routing a portion of condensed water from the second cooling unit via a water dropout stream (143) to the heat recovery steam generator to generate additional steam.

## Patentansprüche

1. Integriertes System (100, 200, 300), umfassend:
ein Gasturbinensystem (102), umfassend:
einen ersten Kompressor (104), der ausgebildet ist, einen gekühlten Gasrückführstrom (140) aufzunehmen und in einen komprimierten Rückführstrom (144) zu komprimieren;
einen zweiten Kompressor (188), der ausgebildet ist,
einen Oxidans-Zuführstrom (120) aufzunehmen und in ein komprimiertes Oxidans zu komprimieren;
eine Verbrennungskammer (110), die ausgebildet ist, den komprimierten Gasrückführstrom und das komprimierte Oxidans aufzunehmen und einen Brennstoffstrom stöchiometrisch zu verbrennen, wobei der komprimierte Gasrückführstrom als Verdünnungsmittel dient, um die Verbrennungstemperaturen herabzusetzen; und
einen Expander (106), der mit dem ersten Kompressor gekoppelt und ausgebildet ist, einen Abfluss aus der Verbrennungskammer aufzunehmen, um einen gasförmigen Abgasstrom (122) zu erzeugen und zumindest teilweise den ersten Kompressor anzutreiben; und
ein Abgasrückführsystem, umfassend:
ein Wärmerückgewinnungsdampferzeuger (126), der ausgebildet ist, den gasförmigen Abgasstrom von dem Expander aufzunehmen und Dampf und einen gekühlten Abgasstrom zu erzeugen;
eine Kühleinheit (134), die ausgebildet ist, den gekühlten Abgasstrom aufzunehmen, die Temperatur des gekühlten Abgasstroms zu verringern, einen Teil des Wassers, das aus dem gekühlten Abgasstrom auskondensiert ist, durch einen Wasserabfallstrom (138) zu entnehmen, und den gekühlten Gasrückführstrom zu erzeugen; und
ein Ladedruckkompressor (142), der ausgebildet ist, den gekühlten Abgasstrom vor der Kühleinheit oder den gekühlten Gasrückführstrom von der Kühleinheit aufzunehmen und den Druck des gekühlten Abgasstroms oder des gekühlten Gasrückführstroms zu erhöhen, bevor dieser Strom in den ersten Kompressor eingeleitet wird,
**dadurch gekennzeichnet, dass**
ein Teil des Wassers, das von dem gekühlten Wasserausfallstom (138) kondensiert ist von dem gekühlten Abgasstrom entnommen wird, um eine Wasserquelle für die Erzeugung von zusätzlichen Dampf in dem Wärmerückgewinnungsdampferzeuger bereitzustellen.

2. System nach Anspruch 1, wobei das Abgasrückführsystem weiter eine Dampfgasturbine (128) umfasst, die ausgebildet ist, den Dampf aufzunehmen und elektrische Energie zu erzeugen.

3. System nach Anspruch 1, wobei der Oxidans-Zuführstrom Luft, sauerstoffreiche Luft und jede Kombinationen davon ist.

4. System nach Anspruch 1, wobei das Abgasrückführsystem weiter eine zweite Kühleinheit (136) umfasst, wobei der Ladedruckkompressor in Fluidverbindung mit den Kühleinheiten steht und zwischen diesen geschaltet ist, wobei die zweite Kühleinheit ausgebildet ist, den gekühlten Gasrückführstrom aufzunehmen und einen zusätzlichen Wasserabfallstrom (143) zu erzeugen.

5. System nach Anspruch 4, wobei der zusätzliche Wasserabfallstrom in Fluidverbindung mit dem Wärmerückgewinnungsdampferzeuger steht, um zusätzlichen Dampf zu erzeugen.

6. System nach Anspruch 1, wobei der gasförmige Abgasstrom der Wärmerückgewinnungseinheit mit einem Druck oberhalb des Atmosphärendrucks, zugeführt wird.

7. System nach Anspruch 1, wobei der Ladedruckkompressor den Druck des gekühlten Gasrückführstroms auf einen Druck zwischen 1,179003 bar_{abs} (17.1 psi_{abs}) und 1,4479 bar_{abs} (21 psi_{abs}) erhöht.

8. System nach Anspruch 1, weiter umfassend einen Spülstrom (146), der aus dem komprimierten Rückführstrom entnommen wird.

9. System nach Anspruch 8, wobei der Spülstrom in einem CO₂ Abscheider (148) behandelt wird, um einen Kohlendioxidstrom und einen Reststrom (151) zu erzeugen, der im Wesentlichen Stickstoffgas umfasst.

10. System nach Anspruch 9, wobei mindestens ein Teil des Kohlendioxidstroms an eine Position zur Kohlenstoffdioxidabscheidung, zum Verkauf von Kohlendioxid, zu Kohlenstoffabscheidung, zum Lüften, oder Kombinationen davon, geleitet wird.

11. Verfahren zum Erzeugen von Energie, umfassend:
Komprimieren eines gekühlten Gasrückführstroms (140) in einem ersten Kompressor (104), um einen komprimierten Rückführstrom (144) zu erzeugen;
Komprimieren eines Oxidans-Zuführstroms (120) in einem zweiten Kompressor (118), um ein komprimiertes Oxidans zu generieren;
Verbrennen eines Brennstoffstroms und des komprimierten Oxidans in Gegenwart des komprimierten Rückführstroms in einer Verbrennungskammer (110), wobei dabei ein Abfluss erzeugt wird, wobei der komprimierte Rückführstrom ausgebildet ist, die Temperatur des Abflusses herabzusetzen;
Ausdehnen des Abflusses in einem Expander (106), um einen gasförmigen Abgasstrom (122) zu erzeugen und mindestens eine Leistungseinheit;
Rückgewinnen von Hitze von dem gasförmigen Abgasabfluss in einem Wärmerückgewinnungsdampferzeuger (126), um Dampf und einen gekühlten Abgasstrom zu erzeugen;
Kühlen des gekühlten Abgasstroms in einer Kühleinheit (134), um mindestens einen Teil des kondensierten Wassers davon zu entnehmen und einen gekühlten Gasrückführstrom zu erzeugen;
Leiten eines Teils des kondensierten Wassers von der Kühleinheit zu dem Wärmerückgewinnungsdampferzeuger mittels eines Wasserabfallstroms (138), um zusätzlichen Dampf zu erzeugen; und
Erhöhen des Drucks des gekühlten Abgasstroms oder des gekühlten Gasrückführstroms in einem Ladedruckkompressor (142) bevor dieser Strom in den ersten Kompressor eingeleitet wird.

12. Das Verfahren nach Anspruch 11, weiter umfassend Erzeugen von elektrischer Energie aus dem Dampf in einer Dampfgasturbine (128).

13. Verfahren nach Anspruch 11, weiter umfassend:
Entfernen eines Teils des komprimierten Rückführstroms in einen Spülstrom (146);
Behandeln des Spühlstroms in einem CO₂ Abscheider (148); und
Absondern eines Kohlendioxidstroms und eines Reststroms (151), der im Wesentlichen Stickstoffgas aus dem CO₂ Abscheider umfasst.

14. Verfahren nach Anspruch 11, weiter umfassend Kühlen des gekühlten Gasrückführstroms in einer zweiten Kühleinheit (136) nachdem der Druck in den gekühlten Gasrückführstrom in dem Ladedruckkompressor erhöht wird; und Entfernen mindestens eines Teils des kondensierten Wassers aus dem gekühlten Gasrückführstrom.

15. Verfahren nach Anspruch 14, weiter umfassend Leiten eines Teils des kondensierten Wassers von der zweiten Kühleinheit zu dem Wärmerückgewinnungsdampferzeuger mittels eines Wasserabfallstroms (143), um zusätzlichen Dampf zu erzeugen.

## Revendications

1. Système intégré (100, 200, 300), comprenant :
un système de turbine à gaz (102), comprenant :
un premier compresseur (104) conçu pour recevoir et comprimer un courant gazeux de recyclage refroidi (140) en un courant de recyclage comprimé (144) ;
un second compresseur (118) conçu pour recevoir et comprimer un oxydant d'alimentation (120) en un oxydant comprimé ;
une chambre de combustion (110) conçue pour recevoir le courant de recyclage comprimé et l'oxydant comprimé, et comburer de manière stoechiométrique un courant de carburant, le courant de recyclage comprimé servant de diluant pour modérer les températures de combustion ; et
un détendeur (106) accouplé au premier compresseur et conçu pour recevoir une décharge de la chambre de combustion pour générer un courant d'échappement gazeux (122) et au moins en partie entraîner le premier compresseur ; et
un système de recirculation de gaz d'échappement, comprenant :
un générateur de vapeur de récupération de chaleur (126) conçu pour recevoir le courant d'échappement gazeux du détendeur et générer de la vapeur et un courant d'échappement refroidi ;
une unité de refroidissement (134) configurée pour recevoir le courant d'échappement refroidi, réduire la température du courant d'échappement refroidi, éliminer une partie d'eau condensée du courant d'échappement refroidi par l'intermédiaire d'un courant de perte d'eau (138), et générer le courant gazeux de recyclage refroidi ; et
un compresseur de suralimentation (142) conçu pour recevoir le courant d'échappement refroidi avant l'unité de refroidissement ou le courant gazeux de recyclage refroidi en provenance de l'unité de refroidissement, et augmenter la pression du courant gazeux refroidi ou du courant gazeux de recyclage refroidi avant l'introduction dudit courant dans le premier compresseur, le système intégré étant **caractérisé en ce qu'**une partie de l'eau condensée du courant de perte d'eau (138) refroidi est éliminée du courant d'échappement refroidi pour fournir une source d'eau pour la génération d'un courant supplémentaire dans le générateur de vapeur de récupération de chaleur.

2. Système selon la revendication 1, dans lequel le système de recirculation de gaz d'échappement comprend en outre une turbine à gaz et vapeur (128) conçue pour recevoir la vapeur et générer de l'énergie électrique.

3. Système selon la revendication 1, dans lequel l'oxydant d'alimentation est de l'air, de l'air riche en oxygène ou une combinaison quelconque correspondante.

4. Système selon la revendication 1, dans lequel le système de recirculation de gaz d'échappement comprend en outre une seconde unité de refroidissement (136) comportant le compresseur de suralimentation accouplé entre les unités de refroidissement, la seconde unité de refroidissement étant conçue pour recevoir le courant gazeux de recyclage refroidi et pour générer un courant de perte d'eau (143) supplémentaire.

5. Système selon la revendication 4, dans lequel le courant de perte d'eau supplémentaire est accouplé fluidiquement au générateur de vapeur de récupération de chaleur pour générer un courant supplémentaire.

6. Système selon la revendication 1, dans lequel le courant d'échappement gazeux est fourni à l'unité de récupération de chaleur à une pression supérieure à la pression atmosphérique.

7. Système selon la revendication 1, dans lequel le compresseur de suralimentation augmente la pression du courant gazeux de recyclage refroidi à une pression comprise entre 1,179003 bara (17,1 psia) et 1,4479 bara (21 psia) .

8. Système selon la revendication 1, comprenant en outre un courant de purge (146) prélevé dans le courant de recyclage comprimé.

9. Système selon la revendication 8, dans lequel le courant de purge est traité dans un séparateur de CO₂ (148) pour générer un courant de dioxyde de carbone et un courant résiduel (151) comprenant sensiblement de l'azote gazeux.

10. Système selon la revendication 9, dans lequel au moins une partie du courant de dioxyde de carbone est envoyée vers un site de stockage de dioxyde de carbone, de vente de dioxyde de carbone, de capture de carbone, de mise à l'air libre ou de combinaisons correspondantes.

11. Procédé de génération d'énergie, consistant à :
comprimer un courant gazeux de recyclage refroidi (140) dans un premier compresseur (104) pour générer un courant de recyclage comprimé (144) ;
comprimer un premier oxydant (120) dans un second compresseur (118) pour générer un oxydant comprimé ;
comburer un courant de carburant et l'oxydant comprimé en présence du courant de recyclage comprimé dans une chambre de combustion (110), de manière à générer une décharge, le courant de recyclage comprimé étant conçu pour modérer la température de la décharge ;
détendre la décharge dans un détendeur (106) pour générer un courant d'échappement gazeux (122) et au moins une unité d'énergie ;
récupérer de la chaleur de la décharge d'échappement gazeuse dans un générateur de vapeur de récupération de chaleur (126) pour produire de la vapeur et un courant d'échappement refroidi ;
refroidir le courant d'échappement refroidi dans une unité de refroidissement (134) pour en éliminer au moins une partie de l'eau condensée et générer le courant gazeux de recyclage refroidi ;
acheminer une partie de l'eau condensée de l'unité de refroidissement, par l'intermédiaire d'un courant de perte d'eau (138), au générateur de vapeur de récupération de chaleur pour générer un courant supplémentaire ; et
augmenter la pression du courant d'échappement refroidi ou du courant gazeux de recyclage refroidi dans un compresseur de suralimentation (142) avant l'introduction dudit courant dans le premier compresseur.

12. Procédé selon la revendication 11, consistant en outre à générer de l'énergie électrique à partir de la vapeur dans une turbine à gaz et vapeur (128).

13. Procédé selon la revendication 11, consistant en outre à :
éliminer une partie du courant de recyclage comprimé dans un courant de purge (146) ; traiter le courant de purge dans un séparateur de CO₂ (148) ; et
décharger du séparateur de CO₂ un courant de dioxyde de carbone et un courant résiduel (151) comprenant sensiblement de l'azote gazeux.

14. Procédé selon la revendication 11, consistant en outre à refroidir le courant gazeux de recyclage refroidi dans une seconde unité de refroidissement (136) après l'augmentation de la pression du courant gazeux de recyclage refroidi dans le compresseur de suralimentation ; et éliminer au moins une partie de l'eau condensée de celui-ci.

15. Procédé selon la revendication 14, consistant en outre à acheminer une partie de l'eau condensée de la seconde unité de refroidissement, par l'intermédiaire d'un courant de perte d'eau (143), au générateur de vapeur de récupération de chaleur pour générer un courant supplémentaire.
